# EUROPÄISCHE PATENTSCHRIFT

(11) **EP 4 509 811 B1**
(45) Veröffentlichungstag und Bekanntmachung des Hinweises auf die Patenterteilung: **06.08.2025**
(21) Anmeldenummer: 24184726.8
(22) Anmeldetag: 26.06.2024
(51) Int. Cl.: G01M 3/38

(54) **VERFAHREN ZUM PRÜFEN VON BEHÄLTERN**
METHOD FOR INSPECTING CONTAINERS
PROCÉDÉ POUR CONTRÔLER DES RÉCIPIENTS

(30) Priorität: 18.08.2023 DE 102023122133
(43) Veröffentlichungstag der Anmeldung: 19.02.2025
(73) Patentinhaber: SICK AG, 79183 Waldkirch (DE)
(72) Erfinder: Schwartzkopff, Tijl, 79108 Freiburg (DE); Müller, Romain, 79252 Stegen (DE); Reichert, Andreas, 79241 Ihringen (DE); Strohmeier, Dirk, 79312 Emmendingen (DE)
(74) Vertreter: Manitz Finsterwald Patent- und Rechtsanwaltspartnerschaft mbB

(56) Entgegenhaltungen:
- EP-A1- 4 137 445
- DE-B3- 102022 103 998
- JP-A- 2018 146 324

## Beschreibung

Die vorliegende Erfindung betrifft ein Verfahren zum Prüfen von zu befüllenden Behältern und Identifizieren von instabilen Behältern in einer Abfüllanlage.

Bei der Abfüllung von fließfähigen Produkten, beispielsweise von flüssigen oder auch pulverförmigen Produkten, in Behälter aus Glas oder Kunststoff, insbesondere in Flaschen, die als Transport- und/oder Verkaufsverpackung dienen sollen, kommen in der Regel vollautomatisierte Abfüllanlagen zum Einsatz. Neben der eigentlichen Füllvorrichtung, welche das abzufüllende Produkt in die Behälter einleitet, weisen derartige Abfüllanlagen noch weitere Vorrichtungen auf. Insbesondere wenn es sich bei den zu befüllenden Behältern um Mehrwegbehälter handelt, ist der Füllvorrichtung in der Regel eine Reinigungsvorrichtung vorgeschaltet, welche die zu befüllenden Behälter von Verschmutzungen reinigt.

Zur Kontrolle des Reinigungserfolges, insbesondere zur Kontrolle auf nicht zu reinigende Verschmutzungen oder sperrige Fremdkörper im Inneren des Behälters einerseits und zum Erkennen von beschädigten Behältern, bei denen beispielsweise Risse oder Abplatzungen im Mündungsbereich des Behälters oder am Behälterkörper vorhanden sind, ist eine entsprechende Inspektionsvorrichtung vorgesehen. Eine derartige Inspektionsvorrichtung wird auch als EBI (von Englisch: Empty Bottle Inspector) bezeichnet.

Zum Transport der Behälter innerhalb der Abfüllanlage ist eine Fördervorrichtung vorgesehen, welche die zu befüllenden Behälter in einer Förderrichtung zumindest von der Inspektionsvorrichtung zu der Füllvorrichtung fördert.

Während des Füllprozesses werden die Behälter oftmals mit Überdruck beaufschlagt. Eine solche Druckbeaufschlagung tritt beispielsweise bei der Befüllung von Flaschen mit kohlensäurehaltigen Getränken auf. Um ein Aufschäumen und/oder Entgasen des Füllguts zu verhindern, kann der Druck in dem Behälter bereits vor dem Befüllen erhöht werden, was auch als Vorspannen bezeichnet werden kann. Häufig werden Behälter vor ihrer Befüllung auch mit einem Spülgas, beispielsweise Kohlendioxid, gespült und ggf. auch vorgespannt, um zum Schutz des Füllguts eine sauerstoffarme oder sauerstofffreie Atmosphäre vor der eigentlichen Befüllung herzustellen. Des Weiteren können während des gesamten Füllprozesses Temperaturunterschiede auftreten, die die Behälter ebenfalls strukturell belasten.

Eine Gefahr besteht darin, dass insbesondere bei einer Druckbeaufschlagung von Behältern während des Vorspannens und/oder des eigentlichen Füllvorgangs einzelne Behälter platzen können. Durch derartige Behälter- oder Flaschenplatzer kann die Produktivität des Abfüllprozesses unerwünscht reduziert werden und sogar schwerwiegende Maschinenschäden und somit lange Ausfallzeiten der Abfüllanlage zur Folge haben. Da eine Füllvorrichtung einer Abfüllanlage zumeist mehrere Füllventile aufweist, um den Durchsatz zu erhöhen, besteht durch einen Behälterplatzer zudem die Gefahr, dass beim Platzen eines Behälters entstehende Materialsplitter benachbarte Füllventile oder die Außenwände benachbarter Behälter kontaminieren. Dies stellt eine erhebliche Gefahr für den Endverbraucher dar.

In der Regel weisen Abfüllanlagen ein Schaderkennungssystem auf, das das Auftreten eines Behälterplatzers erkennen kann. Wenn ein solches Schadereignis detektiert wurde, werden das betroffene Füllventil und auch benachbarte Füllventile abgespült oder abgeschwallt, um gegebenenfalls anhaftende Behältersplitter und Produktreste zu entfernen. Diejenigen Behälter, die sich bei einem Platzereignis in der Nachbarschaft des geplatzten Behälters befanden, werden aus Sicherheitsgründen ausgeleitet und verworfen. Dies kann bis zu 20 oder mehr Behälter betreffen.

Neben der Erkennung von fehlerhaften Behältern, also insbesondere erkennbar beschädigten oder nicht sauberen Behältern, durch die genannte Inspektionsvorrichtung besteht daher ein Bedürfnis, auch instabile Behälter zu erkennen.

Unter instabilen Behältern werden insbesondere solche Behälter verstanden, die aufgrund von strukturellen Mängeln oder Verschleiß eine nicht ausreichende Druck- und/oder Temperaturbeständigkeit aufweisen und daher platzgefährdet sind (also gegebenenfalls eine erhöhte Gefahr des Platzens aufweisen). Mit anderen Worten besteht für instabile Behälter eine erhöhte Wahrscheinlichkeit, dass diese zum Beispiel unter Druckeinfluss beim Füllvorgang platzen.

Zur Vermeidung der vorstehend beschriebenen Schadereignisse soll eine Möglichkeit geschaffen werden, solche instabilen (und daher platzgefährdeten) Behälter rechtzeitig zu erkennen und vor Auftreten eines Schadereignisses aus dem Füllprozess auszuleiten bzw. den Füllprozess in einer Weise zu modifizieren, dass die Wahrscheinlichkeit für das Auftreten eines Schadereignisses reduziert wird.

Aus DE 10 2019 129 726 A1 ist ein Prüfsystem zur Prüfung von zu befüllenden transparenten Behältern bekannt, bei dem eine Prüfung auf instabile Behälter auf der Grundlage eines Wandungsparameters, welcher die mittels eines Wandstärkesensors ermittelte Wandstärke des zu prüfenden Behälters repräsentiert, und eines Behälterparameters und/oder eines Prozessparameters erfolgt.

Ein gattungsgemäßes Verfahren ist aus DE 10 2022 103 998 B3 bekannt. Das dort beschriebene Verfahren zum Prüfen von zu befüllenden Behältern und Identifizieren von instabilen Behältern in einer Abfüllanlage umfasst die Prüfschritte:
- Beleuchten eines zu prüfenden Behälters mit polarisiertem Prüflicht, Erfassen des von dem zu prüfenden Behälter reflektierten oder transmittierten Prüflichts mittels einer änderungsbasierten Prüfkamera, welche einen Bildsensor aufweist, der dazu eingerichtet ist, Ausgangssignale ausschließlich in Reaktion auf erfasste Helligkeitsänderungen zu erzeugen, wobei der Prüfkamera ein Polarisator zugeordnet ist, welcher derart ausgerichtet ist, dass sich die Polarisationsrichtung des den Polarisator passierenden Lichts von der Polarisationsrichtung des von der Beleuchtungseinrichtung erzeugten Prüflichts unterscheidet,
- Überprüfen der von der Prüfkamera erzeugten Ausgangssignale auf die Anwesenheit von lokalen Helligkeitsänderungen (Es wird also überprüft, ob vom Bildsensor lokale Helligkeitsänderungen erfasst werden/wurden),
- Ermitteln eines Maßes einer strukturellen Integrität des zu prüfenden Behälters zumindest auf der Grundlage einer festgestellten lokalen Helligkeitsänderung und vorgegebener Prüfkriterien, und
- Charakterisieren des zu prüfenden Behälters hinsichtlich seiner Stabilität zumindest auf der Grundlage des ermittelten Maßes der strukturellen Integrität unter Anwendung eines Prüfalgorithmus und Erzeugen eines darauf basierenden Behälterstabilitätssignals,
wobei der zu prüfende Behälter während des Prüfens einem Stress ausgesetzt wird.

Das gattungsgemäße Verfahren umfasst eine Kombination von zwei verschiedenen Maßnahmen. Die erste Maßnahme besteht darin, den zu prüfenden Behälter mit polarisiertem Prüflicht anzustrahlen oder zu durchstrahlen und das reflektierte oder transmittierte Prüflicht vor einer Erfassung durch die Prüfkamera mittels eines geeignet ausgerichteten Polarisators hinsichtlich seiner Polarisationsrichtung zu analysieren bzw. zu filtern. Die zweite Maßnahme besteht darin, dieses derart analysierte oder gefilterte Prüflicht nicht mittels einer herkömmlichen Kamera zu erfassen, sondern hierfür eine änderungsbasierte Prüfkamera zu verwenden.

Die Erzeugung des polarisierten Prüflichts kann mittels einer Beleuchtungseinrichtung erfolgen, welche entweder eine Lichtquelle, die bereits polarisiertes Licht erzeugt, z.B. ein Laser, oder eine Kombination aus einer Lichtquelle, die unpolarisiertes Licht erzeugt, und einem zusätzlichen Polarisator, welcher das von der Lichtquelle erzeugte unpolarisierte Licht polarisiert, umfassen kann. Ein solcher zusätzlicher Polarisator ist nicht derjenige, der der Prüfkamera zugeordnet ist. Die Polarisationsrichtung des den der Prüfkamera zugeordneten Polarisator passierenden Lichts verläuft beispielsweise senkrecht zu der Polarisationsrichtung des von der Beleuchtungseinrichtung erzeugten Prüflichts. Die Ausrichtung des der Prüfkamera zugeordneten Polarisators kann allgemein auch so gewählt werden, dass Prüflicht, welches intakte Bereiche des Behälters passiert bzw. an diesen reflektiert wird, durch den der Prüfkamera zugeordneten Polarisator zumindest im Wesentlichen unterdrückt wird. Der der Prüfkamera zugeordnete Polarisator erfüllt somit die Funktion eines Analysators. Es wird der Effekt ausgenutzt, dass strukturelle Anomalien des Behälters die Polarisationsrichtung des einfallenden Prüflichts verändern können, so dass ein auf den Bildsensor der Prüfkamera auftreffendes Abbild des zu prüfenden Behälters lokale Helligkeitsänderungen aufweisen kann, welche einen Indikator für die genannten strukturellen Anomalien des Behälters darstellen.

Die zweite Maßnahme besteht in der Verwendung einer hier als änderungsbasiert bezeichneten Prüfkamera. Eine solche änderungsbasierte Prüfkamera wird auch als Eventkamera (Ereigniskamera) bezeichnet und umfasst einen Bildsensor, welcher ein zweidimensionales Array von lichtempfindlichen Elementen oder Pixeln umfasst, wobei im Unterschied zu einem herkömmlichen Bildsensor die Ausgangs- oder Bildsignale ausschließlich in Reaktion auf erfasste Helligkeitsänderungen erzeugt werden. Ein beispielhafter derartiger Bildsensor wird auch als ein retinomorpher oder neuromorphologischer Bildsensor bezeichnet. Die von einem derartigen Bildsensor erzeugten Ausgangssignale können als dreidimensionales Datenarray aufgefasst werden, wobei entsprechend der arrayförmigen Ausgestaltung des Bildsensors die Ortskoordinaten des Bildsensors als erste und zweite Dimension und die Zeit als dritte Dimension aufgefasst werden können. Während bei herkömmlichen Bildsensoren in der Regel über eine vorgegebene Akquisitionszeit Ladung in den lichtempfindlichen Elementen oder Pixeln akkumuliert wird und anschließend ausgelesen und digitalisiert wird, werden bei einer änderungsbasierten Prüfkamera Helligkeitsänderungen detektiert, wobei jedes Bildelement oder Pixel unabhängig von anderen Pixeln und asynchron ausgewertet wird. Helligkeitsänderungen werden so annähernd in Echtzeit detektiert, was zu einem Anstieg bzw. Abfall der Signalhöhe des Ausgangssignals führt. Wenn sich die von einem Bildelement erfasste Helligkeit nicht ändert, geht die Signalhöhe des von diesem Bildelement erzeugten Ausgangssignals gegen Null. Ein Bildsensor einer änderungsbasierten Kamera (also zum Beispiel ein retinomorpher oder neuromorphologischer) Bildsensor erzeugt im Prinzip als Ausgangssignale eine pixelbasierte zeitliche Ableitung erster Ordnung oder Differenziation eines von einem jeweiligen Bildelement erfassten Helligkeitsverlaufs.

Eine änderungsbasierte Prüfkamera mit einem solchen Bildsensor weist gegenüber einer Prüfkamera mit einem herkömmlichen Bildsensor sowohl einen erhöhten Dynamikbereich als auch eine wesentlich erhöhte Bildwiederholrate auf. Während bei einem herkömmlichen Bildsensor der Dynamikbereich typischerweise zwischen 40 bis 60 dB beträgt, weist ein typischer retinomorpher oder neuromorphologischer Bildsensor einen Dynamikbereich von bis zu 120 dB auf. Im Vergleich zu herkömmlichen Bildsensoren, bei denen Bildwiederholraten von bis zu 120 bps (Bilder pro Sekunde) erzielt werden können und im Fall von Hochgeschwindigkeitskameras, deren Bildwiederholrate im Bereich von ungefähr 10.000 bps liegen kann, kann die Bildwiederholrate von änderungsbasierten Prüfkameras in der Größenordnung von 1.000.000 bps liegen. Dadurch können sowohl Objekte, welche einen großen Helligkeitsbereich oder Dynamikbereich aufweisen, als auch bewegte Objekte mit großer Präzision erfasst werden. Artefakte wie ein Unter- oder Übersteuern des Bildsensors oder das Auftreten von Bewegungsunschärfen bei bewegten Objekten können durch die Verwendung einer änderungsbasierten Prüfkamera vermieden werden.

Auch wenn die genannte änderungsbasierte Prüfkamera als "Ereignis"-kamera bezeichnet werden kann, soll der darin enthaltene Wortbestandteil "Ereignis" keinesfalls derart missverstanden werden, dass mit einer Ereigniskamera ausschließlich nur solche Ereignisse erfasst werden könnten, die in diesem Kontext als tatsächliche Schadereignisse bezeichnet werden. Vielmehr können jegliche Ereignisse erfasst werden, die zu detektierbaren Helligkeitsänderungen auf dem Bildsensor führen. Am Bildsensor auftretende Helligkeitsänderungen werden also als sensorrelevante "Ereignisse" aufgefasst.

Das nachfolgende Überprüfen der Ausgangssignale auf die Anwesenheit von lokalen Helligkeitsänderungen kann ein zeitliches und/oder räumliches Filtern der Ausgangssignale, insbesondere ein Glätten, umfassen.

Die genannten Prüfkriterien definieren insbesondere, welche Voraussetzungen erfüllt sein müssen, damit eine erkannte lokale Helligkeitsänderung als relevant für die Integrität angesehen werden kann. Dies kann beispielsweise eine Entscheidung umfassen, ob ein Riss oder Kratzer vorhanden ist oder nicht. Das genannte Maß der strukturellen Integrität kann beispielsweise basierend auf einer Anzahl und/oder einem Schweregrad der aufgrund von Helligkeitsänderungen ermittelten strukturellen Anomalien bestimmt werden.

In einem nächsten Schritt wird nunmehr der zu prüfende Behälter hinsichtlich seiner Stabilität charakterisiert, wobei hier ein Prüfalgorithmus und das zuvor ermittelte Maß der strukturellen Integrität als Grundlage dienen. So kann beispielsweise der Prüfalgorithmus definieren, welche Voraussetzungen erfüllt sein müssen, damit ein Unterschreiten eines bestimmten Maßes an struktureller Integrität als relevant für die Behälterstabilität angesehen werden kann. So kann der Prüfalgorithmus z.B. eine Entscheidung umfassen, ob eine vorgegebene Größe und/oder Anzahl für Risse oder Kratzer überschritten ist oder nicht.

Eine zur Erzeugung des polarisierten Prüflichts vorgesehene Beleuchtungsvorrichtung und die Prüfkamera können strahlformende optische Elemente aufweisen. So kann die Beleuchtungsvorrichtung beispielsweise ein oder mehrere Kondensorlinsen zur Strahlaufweitung umfassen. Die Prüfkamera kann ein Objektiv aufweisen, welches auf dem Bildsensor durch Abbildung des von dem zu prüfenden Behälter reflektierten oder transmittierten Prüflichts sozusagen ein Bild des zu prüfenden Behälters erzeugt. In diesem Bild sind aufgrund der Verwendung von polarisiertem Licht nur ein Teil der Bildinformationen im Vergleich zu einer Erfassung von unpolarisiertem Licht enthalten.

Während des Prüfens wird der zu prüfende Behälter einem Stress ausgesetzt. Hierdurch können auch solche strukturellen Anomalien erkannt werden, die unter Standardbedingungen, bei denen der zu prüfende Behälter keinen oder nur geringen strukturellen Belastungen ausgesetzt ist, nicht oder nur in abgeschwächter Form auftreten. Der Stress kann durch ein fortschreitendes Erhöhen des Innendrucks und/oder der Temperatur des zu prüfenden Behälters erzeugt werden. Dies kann beispielsweise im Rahmen eines dezidierten Prüfvorgangs erfolgen, bei dem ein Spül- oder Spanngas, beispielsweise CO₂, in den Behälter eingeleitet wird und dessen Druck kontinuierlich erhöht wird. Auch im Rahmen eines Reinigungsvorgangs, bei welchem die Behältertemperatur durch Einleiten von erwärmtem Reinigungsmittel erhöht wird und ggf. zusätzlich eine Druckerhöhung erfolgt, kann der einwirkende Stress erzeugt werden.

Es ist die Aufgabe der Erfindung, ein Verfahren zum Prüfen von zu befüllenden Behältern und zum Identifizieren von instabilen Behältern in einer Abfüllanlage anzugeben, bei dem das Erzeugen des auf den Behälter einwirkenden Stresses verbessert ist.

Die Lösung der Aufgabe erfolgt durch ein Verfahren mit den Merkmalen des Anspruchs 1. Vorteilhafte Ausgestaltungen der Erfindung ergeben sich aus den Unteransprüchen, der Beschreibung und den Zeichnungen.

Bei dem erfindungsgemäßen Verfahren wird der Stress durch eine Anpresskraft erzeugt, die den Behälter gegen ein Füllventil einer Füllvorrichtung der Abfüllanlage presst.

Eine Abfüllanlage, in welcher das erfindungsgemäße Prüfverfahren zur Anwendung kommt, kann verschiedene einzelne Vorrichtungen umfassen, wie sie oben auch erwähnt sind. Eine typische charakteristische Vorrichtung einer Abfüllanlage ist beispielsweise eine als Füllkarussell ausgestaltete Füllvorrichtung, welches eine Vielzahl von kreisförmig angeordneten Füllpositionen für die einzelnen Behälter und jeweilige Füllventile aufweist. Die Behälter werden sequenziell zugeführt, an einer jeweiligen Füllposition aufgenommen und mit einem Füllventil verbunden. Hierbei können die Behälter in der Füllvorrichtung auf Hubtellern stehend gelagert werden, welche sich entlang einer Förderstrecke bewegen und den Behälter anheben und dabei von unten gegen ein jeweiliges an einem rotierenden Ringkessel angeordnetes Füllventil pressen. Sie verweilen während einer bestimmten Rotationsdauer in dieser Füllposition und werden dort diversen Spül-, Vorspann- und Füllvorgängen unterzogen, bis sie anschließend aus dem Füllkarussell abgesetzt und gegebenenfalls weiteren Prozeduren unterzogen werden, beispielsweise einem Prüfen auf Füllhöhe und/oder einem Verschließen des Behälters. Zum Absetzen werden die Hubteller mit den gefüllten Behältern wieder abgesenkt und dadurch vom Füllventil gelöst.

Die Prüfkamera wird erfindungsgemäß nahe an der Position am Füllkarussell angeordnet, an welcher die zu befüllenden Behälter mit dem Füllventil in Berührung kommen. Es ist grundsätzlich jedoch nicht ausgeschlossen, dass zusätzliche Prüfkameras vorgesehen sind, welche an anderen Positionen innerhalb der Abfüllanlage angeordnet sein können.

Der Vorteil des erfindungsgemäßen Verfahrens liegt darin, dass der auf den zu prüfenden Behälter einwirkende Stress, der erforderlich ist, um strukturelle Anomalien des Behälters mittels der änderungsbasierten Prüfkamera zu detektieren, nicht pneumatisch durch Einleiten eines Spülgases und Vorspannens des zu prüfenden Behälters erzeugt wird, sondern auf mechanischem Weg z.B. mit Hilfe einer Fördervorrichtung erfolgt. Eine derartige der Füllvorrichtung zugeordnete Fördervorrichtung ist bei Abfüllanlagen in der Regel vorhanden, um die zu befüllenden Behälter der Füllvorrichtung zuzuführen, diese während des Füllvorgangs an die Füllventile zu pressen und nach erfolgter Befüllung von der Füllvorrichtung zu lösen und abzutransportieren. Es hat sich gezeigt, dass hierdurch der zum Prüfen notwendige Stress auf einfache Weise und kontrolliert erzeugt werden kann.

Um eine Behälterverfolgung und gegebenenfalls eine adäquate Behandlung von als instabil erkannten Behältern zu gewährleisten, können Mittel zur Behälterverfolgung vorgesehen sein. Diese Mittel zur Behälterverfolgung können beispielsweise ein Erzeugen von Identifikationssignalen umfassen, bevorzugt mittels Verwendung eines Schieberegisters, wobei die Identifizierungssignale eine Nachverfolgung und/oder Identifizierung eines Behälters während seiner Verweildauer an verschiedenen Positionen der Abfüllanlage ermöglichen, wobei verschiedene Identifizierungssignale derart miteinander verknüpft werden können, dass ein jeweiliger Behälter zumindest von einem Zeitpunkt seiner (ersten) Prüfung bis zu einem Zeitpunkt seines Befüllens nachverfolgbar und/oder identifizierbar ist.

Gemäß einer vorteilhaften Ausgestaltung des Verfahrens wird die Anpresskraft während des Prüfens fortschreitend erhöht. Dies kann beispielsweise durch eine entsprechende Ansteuerung der genannten Fördervorrichtung erfolgen. Oftmals wird die Höhenverstellung der Hubteller der Fördervorrichtung durch eine Kulisse gesteuert. Durch eine Modifizierung oder Feinanpassung der Kulisse im Bereich der Prüfkamera kann der Kraftverlauf in der gewünschten Weise eingestellt werden.

Vorteilhafterweise wird bei einer erkannten potentiellen Behälterinstabilität das fortschreitende Erhöhen der Anpresskraft sofort oder bei Erreichen eines vorgegebenen Schwellenwerts beendet. Hierfür können die Hubteller beispielsweise mit entsprechenden Aktoren versehen sein. Damit wird verhindert, dass potentiell instabile Behälter durch einen zu hohen Anpressdruck, der insbesondere in Verbindung mit dem beim Füllvorgang auftretenden zusätzlichen mechanischen Stress, zum Platzen gebracht werden.

Gemäß einer weiteren vorteilhaften Ausgestaltung wird zur Kompensation einer Bewegung des zu prüfenden Behälters während des Erfassens des Prüflichts ein zwischen dem sich bewegenden Behälter und dem Bildsensor aufgespannter Empfangslichtpfad derart modifiziert, dass sich die Relativlage eines Abbilds des zu prüfenden Behälters auf dem Bildsensor zumindest während eines vorgegebenen Erfassungszeitraums nicht ändert.

Durch das Modifizieren des Empfangslichtpfads wird das Gesichtsfeld oder FOV (von engl. Field of View) der Prüfkamera entsprechend der Bewegung des zu prüfenden Behälters nachgeführt. Dadurch wird vermieden, dass lokale Helligkeitsänderungen, die nicht auf eine verminderte strukturelle Integrität des zu prüfenden Behälters zurückzuführen sind, sondern aufgrund einer Relativbewegung zwischen dem zu prüfenden Behälter und der Prüfkamera während des Erfassens des reflektierten oder transmittierten Prüflichts registriert werden, das Prüfergebnis verfälschen. Es hat sich gezeigt, dass Änderungen der Polarisation, die beim Ausüben von Stress auf den zu prüfenden Behälter auftreten, eine gewisse Trägheit aufweisen. Der Transport von Behältern durch eine Abfüllanlage erfolgt in der Regel kontinuierlich. Kurzzeitiges Anhalten einzelner Behälter ist im Normalfall nicht vorgesehen und könnte nur mit einem mit Kosten verbundenen technischen Aufwand konstruktiv in die Abfüllanlage integriert werden. Deshalb bietet die vorliegende Erfindung eine kostengünstige Lösung, das Prüfen von Behältern auf Instabilität mittels einer änderungsbasierten Prüfkamera noch zuverlässiger zu gestalten.

Das Modifizieren des Empfangslichtpfads während des Erfassens des Prüflichts erfolgt derart, dass sozusagen das Abbild des zu prüfenden Behälters auf dem Bildsensor fixiert wird. Dadurch wird sichergestellt, dass Lichtsignale, die von einer bestimmten Stelle des zu prüfenden Behälters stammen, zumindest während des Erfassungszeitraums in dem gleichen Teilbereich des Bildsensors akkumuliert werden und bei auftretenden Helligkeitsunterschieden entsprechend detektiert werden können. Dadurch wird insbesondere auch vermieden, dass Helligkeitsunterschiede aufgrund von Bewegungsunschärfen möglicherweise solche Helligkeitsunterschiede überdecken, die auf relevante Strukturanomalien des zu prüfenden Behälters zurückzuführen sind. Das erfindungsgemäße Verfahren vermeidet somit das Erzeugen von sowohl falsch positiven als auch von falsch negativen Behälterstabilitätssignalen.

Es hat sich gezeigt, dass der Erfassungszeitraum, also der Zeitraum, während dessen sich die Position des Abbilds auf dem Bildsensor nicht ändern soll, bevorzugt zwischen 20 und 100 ms betragen sollte. Insbesondere bei einer Anordnung, bei welcher reflektiertes Prüflicht erfasst wird, ist es erforderlich, Prüflicht mit einer relativ großen Helligkeit zu verwenden. Diese hohe Lichtdichte kann unter Umständen dazu führen, dass das Prüfverfahren besonders empfindlich auf etwaige Bewegungen des Behälters reagiert. Somit sind bei einer Reflexionskonfiguration besonders große Verbesserungen zu erwarten.

Gemäß einer weiteren vorteilhaften Ausgestaltung des Verfahrens ist wenigstens eine Nachführvorrichtung vorgesehen, welche die Prüfkamera und/oder eine im Empfangslichtpfad zwischen dem zu prüfenden Behälter und der Prüfkamera angeordnete Umlenkeinrichtung translatorisch und/oder rotatorisch zumindest während des Erfassungszeitraums derart bewegt, dass sich die Relativlage eines Abbilds des zu prüfenden Behälters auf dem Bildsensor zumindest während des vorgegebenen Erfassungszeitraums nicht ändert. Die Nachführvorrichtung dient somit der erfindungsgemäßen Modifizierung des Empfangslichtpfads. Die Nachführvorrichtung kann mit der Bewegung des zu prüfenden Behälters synchronisiert werden, was beispielsweise durch Empfang entsprechender Synchronisationssignale von einer Steuereinrichtung der Abfüllanlage erfolgen kann. Die Synchronisierung kann sowohl bezüglich eines Zyklusbeginns als auch bezüglich der Bewegungsgeschwindigkeiten des zu prüfenden Behälters und der Nachführvorrichtung erfolgen. Gegebenenfalls kann es notwendig sein, die Prüfkamera bzw. die Umlenkeinrichtung in eine Ausgangsstellung zurückzuführen. Während dieser Zeit erfolgt keine Prüfung von Behältern. Um eine Fehlauswertung zu vermeiden, kann während dieser Rückführzeit eine Datenübertragung an eine Auswerteeinheit bzw. eine Datenauswertung innerhalb der Auswerteeinheit unterbunden werden. Grundsätzlich ist es möglich, die beiden genannten Alternativen einer beweglichen Prüfkamera und einer beweglichen Umlenkeinrichtung miteinander zu kombinieren.

Gemäß einer weiteren vorteilhaften Ausgestaltung ist zumindest eine Prüfkamera an der Nachführvorrichtung angeordnet, wobei die Nachführvorrichtung die zumindest eine Prüfkamera kontinuierlich oder diskontinuierlich entlang eines Bewegungspfads verfährt. Der Bewegungspfad kann translatorisch und/oder rotatorisch wirkende Abschnitte umfassen. Die Nachführung kann hierbei beispielsweise als ein umlaufendes Transportband, ein kulissengeführter Transportschlitten oder als ein rotierender Träger für die zumindest eine Prüfkamera ausgebildet sein.

Vorteilhafterweise sind an der Nachführvorrichtung mehrere Prüfkameras angeordnet, welche jeweilige Bilderfassungsbereiche aufweisen, die sich nicht oder nur teilweise überlappen. Hierdurch können mehrere zu prüfende Behälter, die sich beispielsweise entlang einer Förderstrecke oder in einem Füllkarussell der Abfüllanlage bewegen, gleichzeitig geprüft werden. So kann insbesondere auch während einer Rückführung einer Prüfkamera in eine Ausgangsposition, bei der diese Kamera für eine Prüfung temporär nicht verfügbar ist, eine andere Prüfkamera für eine Prüfung aktiviert werden. Somit ist eine kontinuierliche Prüfung eines Behälterstroms möglich.

Gemäß einer weiteren vorteilhaften Ausgestaltung umfasst die Umlenkeinrichtung einen Spiegel, ein Polygonrad oder ein Prismenrad, wobei die Nachführvorrichtung dazu eingerichtet ist, die Umlenkeinrichtung mit gleicher oder periodisch wechselnder Drehrichtung zu rotieren. Bei einer ausschließlichen Verwendung einer Umlenkeinrichtung ist es möglich, die Prüfkamera ortsfest zu positionieren. Hierdurch vereinfacht sich der konstruktive Aufwand bei der Führung der notwendigen elektrischen Leitungen zwischen der Prüfkamera und einer Auswerte- bzw. Steuereinheit, über welche die Prüfkamera mit Energie versorgt und die erfassten Daten transportiert werden. Beispiele für Umlenkeinrichtungen mit gleicher Drehrichtung sind insbesondere ein Polygonrad oder ein Prismenrad. Ein Beispiel für eine Umlenkeinrichtung mit periodisch wechselnder Drehrichtung ist ein Schwingspiegel. Grundsätzlich können auch bei der Verwendung einer Umlenkeinrichtung mehrere Prüfkameras vorgesehen sein. Erforderlichenfalls können auch mehrere Umlenkeinrichtungen entsprechend der Anzahl der Prüfkameras vorgesehen werden. Damit ist ebenfalls eine weitgehend kontinuierliche Prüfung eines Behälterstroms möglich.

Gemäß einer weiteren vorteilhaften Ausgestaltung ist die Nachführvorrichtung dazu eingerichtet, die Prüfkamera und/oder die Umlenkeinrichtung in wenigstens zwei Raumrichtungen zu bewegen. Damit kann die Nachführvorrichtung eine Nachführung des Gesichtsfelds in zwei Raumrichtungen bewirken, beispielsweise in Richtung einer Förderrichtung der Behälter durch die Abfüllanlage bzw. die Fördervorrichtung und zusätzlich in Wirkrichtung der Anpresskraft bzw. in einer entsprechenden Bewegungsrichtung des Behälters zum Füllventil hin.

Gemäß einer weiteren vorteilhaften Ausgestaltung umfasst das Überprüfen der von der Prüfkamera erzeugten Ausgangssignale auf die Anwesenheit von lokalen Helligkeitsänderungen ein Analysieren der Ausgangssignale mittels Methoden der Mustererkennung, insbesondere mittels Methoden zur Segmentierung, Methoden zur Klassifizierung und/oder Methoden maschinellen Lernens. Diese vorteilhafte Ausgestaltung definiert insbesondere eine vorteilhafte Ausgestaltung der genannten Prüfkriterien. Das Analysieren der Ausgangssignale mittels Methoden der Mustererkennung kann insbesondere auch dazu dienen, solche Helligkeitsänderungen, die beispielsweise von eigentlich intakten Randbereichen des zu prüfenden Behälters verursacht werden, von solchen Helligkeitsänderungen zu unterscheiden, die von tatsächlich vorhandenen strukturellen Anomalien erzeugt werden.

Gemäß einer weiteren vorteilhaften Ausgestaltung wird von einer Füllvorrichtung der Abfüllanlage zumindest ein Prozessparameter empfangen, und das Charakterisieren des zu prüfenden Behälters hinsichtlich seiner Stabilität wird zusätzlich auf der Grundlage des Prozessparameters durchgeführt. Bei dem genannten zumindest einen Prozessparameter kann es sich beispielsweise um den Fülldruck und/oder die Fülltemperatur des Füllguts während des eigentlichen Füllvorgangs handeln. Auch der Spanndruck bzw. der Druck eines eventuell angewendeten Spül- oder Spanngases kann als Prozessparameter herangezogen werden. Weitere mögliche Prozessparameter können der Druck und/oder die Temperatur eines Reinigungsfluids sein, mit welchem die zu befüllenden Behälter vor dem Befüllen gereinigt werden.

Gemäß einer weiteren vorteilhaften Ausgestaltung wird von der Abfüllanlage zumindest ein Behälterparameter empfangen und das Charakterisieren des zu prüfenden Behälters hinsichtlich seiner Stabilität zusätzlich auf der Grundlage des Behälterparameters durchgeführt. Bei dem Behälterparameter kann es sich beispielsweise um eine universale Eigenschaft des verwendeten Behältertyps, z.B. die Größe, Form oder Sollwandstärke, handeln, d.h. um einen Behältertypparameter. Weiterhin kann als Behälterparameter auch eine individuelle Eigenschaft des jeweiligen zu prüfenden Behälters bei der Charakterisierung des Behälters berücksichtigt werden. Hierfür kann beispielsweise eine gemessene Wandstärke des Behälters oder ein Verschleißparameter, welcher den Verschleißzustand des Behälters repräsentiert, berücksichtigt werden. Ein solcher individueller Behälterparameter kann zum Beispiel von einer zusätzlichen Inspektionsvorrichtung der Abfüllanlage bereitgestellt werden, beispielsweise von einer EBI. Ein exemplarischer Verschleißparameter ist der sogenannte Zerkratzungsgrad (auch als Scuffing-Grad bezeichnet). Der Zerkratzungsgrad beschreibt den Zustand der Behälteroberfläche, wobei zu dessen Ermittlung insbesondere bei Mehrwegbehältern oder Mehrwegflaschen etwas exponierte umlaufende Wandungsbereiche des Behälters untersucht werden, die während des Füllprozesses oder des Transports regelmä-ßig mit entsprechenden Wandungsbereichen benachbarter Behälter oder anderen Strukturen in Berührung kommen können. Die Behälteroberfläche wird insbesondere in den exponierten Wandungsbereichen mit jedem Umlauf zunehmend verkratzt, so dass sich die Oberflächenrauigkeit erhöht und als Maß für einen Verschleiß herangezogen werden kann. Als ein weiterer Behälterparameter kann eine gemessene Wandstärke betrachtet werden, die mittels eines entsprechenden Wandstärkesensors ermittelt werden kann. Die gemessene Wandstärke kann zu einer Soll-Wandstärke, die als ein Behältertypparameter betrachtet werden kann, in ein Verhältnis gesetzt werden, so dass die Wandstärke ebenfalls als Maß für einen Verschleiß des Behälters herangezogen werden kann. Noch ein weiterer Behälterparameter kann beispielsweise eine Zentrizität eines zylindrischen Behälters sein, d.h. ein Maß für das Einhalten eines kreisförmigen Querschnitts bzw. ein Maß für eine Konstanz eines Verhältnisses zwischen dem Radius der Innenwand und dem Radius der Außenwand.

Die Behälterparameter können mittels geeigneter Sensoren, beispielsweise mittels zusätzlicher Bildsensoren oder sonstiger Sensoren wie Ultraschallsensoren, ermittelt werden. Der oder die von der eingangs genannten Inspektionsvorrichtung oder in anderer Weise ermittelten Behälterparameter können über eine zugeordnete Steuereinrichtung an eine Auswerteeinheit eines nachfolgend noch näher beschriebenen Prüfsystems übermittelt werden, wobei bevorzugt jedem überprüften Behälter mit Hilfe einer Einrichtung zur Behälterverfolgung die für diesen ermittelten Behälterparameter zugeordnet werden können.

Gemäß einer weiteren vorteilhaften Ausgestaltung wird von einer Füllvorrichtung der Abfüllanlage gegebenenfalls ein Ereignisparameter empfangen, welcher ein beim Befüllen eines Behälters auftretendes jeweiliges Schadereignis repräsentiert. Die vorgegebenen Prüfkriterien und/oder der Prüfalgorithmus werden zumindest auf der Grundlage des gegebenenfalls empfangenen Ereignisparameters angepasst. Die Füllvorrichtung kann beispielsweise ein Schaderkennungssystem aufweisen, welches dazu eingerichtet ist, einen während des Befüllens eines Behälters auftretenden Behälterschaden als Schadereignis zu erfassen, und zumindest auf der Grundlage des erfassten Schadereignisses den genannten Ereignisparameter zu erzeugen. Der Ereignisparameter kann zusätzlich zu dem eigentlichen Auftreten eines Schadereignisses auch noch andere Parameter enthalten, welche beispielsweise weitere Randbedingungen wie den während des Auftretens des Schadereignisses vorherrschenden Fülldruck repräsentieren können. Dabei soll mit dem Ausdruck "gegebenenfalls" im vorstehend erläuterten Zusammenhang klargestellt werden, dass der Ereignisparameter nur dann empfangen wird, wenn auch ein zugrunde liegendes Schadereignis stattgefunden hat. Wenn ein solches Schadereignis ausbleibt, wird auch kein entsprechender Ereignisparameter erzeugt, übermittelt und/oder empfangen.

Die vorstehend beschriebene Ausgestaltung umfasst insbesondere auch den Fall, dass das Anpassen der vorgegebenen Prüfkriterien und/oder des Prüfalgorithmus auch auf der Grundlage einer Mehrzahl von ggf. empfangenen Ereignisparametern erfolgt, wobei die mehreren Ereignisparameter jeweilige Schadereignisse repräsentieren. Das Berücksichtigen von mehreren Ereignisparametern kann beispielsweise in einer Form erfolgen, dass auf der Grundlage aus einer Mehrzahl von Schadereignissen und einer Gesamtzahl von befüllten Behältern eine Schadquote ermittelt wird, auf deren Grundlage dann das Anpassen der Prüfkriterien und/oder des Prüfalgorithmus erfolgt. Das Ermitteln der Schadquote kann sich insbesondere auf einen bestimmten Zeitraum beziehen, so dass die Schadquote einer Anzahl von Schadereignissen pro Zeitraum dividiert durch die Gesamtzahl von Füllvorgängen in diesem Zeitraum entspricht.

Die Anpassung der Prüfkriterien bzw. des Prüfalgorithmus auf der Grundlage von Ereignisparametern, welche einzelne Schadereignisse kennzeichnen, kann durch eine Einrichtung zur Behälterverfolgung unterstützt werden, da es hierdurch möglich ist, die für einen beschädigten Behälter zuvor ermittelten Parameter, insbesondere dessen strukturelle Integrität, zu identifizieren und auf der Grundlage dieser Parameter die Prüfkriterien bzw. den Prüfalgorithmus anzupassen, d.h. beispielsweise definierte Grenzwerte zu verändern. Das Anpassen der Prüfkriterien bzw. des Prüfalgorithmus erfolgt in einer Weise, dass die Erkennung von instabilen Behältern verbessert ist. Diese Verbesserung umfasst sowohl eine Verminderung der Schadquote als auch eine Reduzierung der Quote von falsch-positiven Charakterisierungen von Behältern, d.h. die Anzahl von irrtümlich als instabil charakterisierten Behältern soll ebenfalls reduziert werden.

In dem Zusammenhang hat es sich als vorteilhaft erwiesen, wenn die Prüfkriterien und/oder der Prüfalgorithmus zumindest auf der Grundlage einer Datenbank, in welcher für eine Mehrzahl von Schadereignissen zumindest ein jeweiliger empfangener Ereignisparameter hinterlegt ist, bevorzugt unter Verwendung von Methoden des maschinellen Lernens, derart angepasst werden, dass die Erkennung von instabilen Behältern verbessert ist.

Derartige Ausgestaltungen zur Anpassung der Prüfkriterien bzw. des Prüfalgorithmus können als eine Form einer datenbasierten Modellierung angesehen werden. Eine solche Modellierung oder Modellbildung kann durch verschiedene Methoden des maschinellen Lernens erfolgen. Insbesondere kann bestärkendes Lernen (englisch "reinforcement learning") zum Einsatz kommen, wobei ein dem Prüfalgorithmus zugrundeliegendes Modell eine positive Rückmeldung erhält, wenn ein Behälter den Füllprozess ohne Beschädigung übersteht, und eine negative Rückmeldung erhält, wenn der Behälter während des Füllens platzt. Um ein Ansteigen einer Nichtbefüllungs- oder Ausleitungsquote über ein erwünschtes Maß hinaus zu vermeiden, bewirkt die Nichtbefüllungs- oder Ausleitungsquote ebenfalls eine negative Rückkopplung. Um das gewünschte Optimierungsziel, weder eigentlich instabile Behälter auszusortieren noch an sich instabile Behälter unter Standardbedingungen zu befüllen, zu erreichen, kann vorgesehen sein, dass die negative Rückmeldung eines Schadereignisses stärker gewichtet wird als die Nichtbefüllungs- oder Ausleitungsquote. Alternativ oder zusätzlich kann eine Verbesserung der Prüfkriterien und/oder des Prüfalgorithmus durch maschinelles Lernen über statistische Methoden, wie z.B. durch Prädiktion einer übergeordneten Zielgröße, erfolgen, die für den Gesamtprozess wesentlich ist. Die Prüfkriterien bzw. der Prüfalgorithmus werden also nicht auf der Grundlage von individuellen Ereignissen beim Füllvorgang angepasst ("Schadereignis oder kein Schadereignis"), sondern auf der Basis der Schadquote und der Nichtbefüllungs- oder Ausleitungsquote. Eine zur Durchführung des Verfahrens vorgesehene Auswerteeinheit kann in einem Trainingsvorgang auf Basis von Historiendaten aus der Datenbank dazu ausgebildet werden, die den Behältern zugeordneten Parameter auf ein Zielereignis "Behälterplatzer" abzubilden. Dabei lernt die Auswerteeinheit unter Verwendung von Methoden des maschinellen Lernens, Kombinationen aus Behälter- und Prozessparametern mit einem Wahrscheinlichkeits-Score für ein Schadereignis zu assoziieren und mithin Schadereignisse für einen Behälter im Abfüllprozess aus den verfügbaren Daten zu prädizieren. Durch derartige Lernverfahren ist eine fortlaufende Optimierung auch bei sich ändernden Prozessparametern und unterschiedlichen Behältertypen gegeben.

Für die Ausbildung eines den Prüfkriterien und/oder dem Prüfalgorithmus zugrundliegenden Modells können in allen Fällen verschiedene Methoden des maschinellen Lernens zum Einsatz kommen, wie z.B. Deep Learning, Boosted Trees, Random Forests oder Support Vector Machines. Ein wesentlicher Punkt bei den vorgeschlagenen Ansätzen ist, dass die Modellbildung (als Ergebnis eines Lernverfahrens auf der Grundlage von Prozessdaten) zu einem individualisierten Modell der zu überprüfenden Abfüllanlage und der darin verwendeten Behälter führt. Auf der Basis dieses Modells lassen sich dann Ereignisse, die sich aus der konkreten Verwendung der Abfüllanlage zu einem gegebenen Zeitpunkt in Kombination mit den verwendeten Behältern ergeben, spezifisch prädizieren. Dieser Ansatz geht über die Verwendung von Technologien des maschinellen Lernens zur Realisierung von lokalen Funktionen (z.B. einem Einsatz eines tiefenneuronalen Netzes für eine Bilderkennung der von der Prüfkamera oder anderen Bildsensoren erzeugten Ausgangssignale im Gesamtprozess) hinaus, da der Gesamtprozess selbst modelliert wird und alle relevanten Prozesselemente für die Zielgrößenprädiktion berücksichtigt werden.

Gemäß einer weiteren vorteilhaften Ausgestaltung umfasst das Behälterstabilitätssignal bei einer erkannten potentiellen Behälterinstabilität Anweisungen an die Abfüllanlage, den betreffenden Behälter in einer modifizierten Weise zu befüllen oder den betreffenden Behälter vor dem Befüllen auszuleiten. Das Behälterstabilitätssignal mit den genannten Anweisungen wird bevorzugt an eine Füllvorrichtung der Abfüllanlage bzw. an eine der Füllvorrichtung vorgeordnete Behälterausleitungsvorrichtung ausgegeben. In dem Fall ist in dem Behälterstabilitätssignal sozusagen bereits eine Anweisung kodiert, welche die Füllvorrichtung in die Lage versetzt, den zu befüllenden Behälter in adäquater Weise zu behandeln. Das Befüllen eines Behälters in einer modifizierten Weise bei einer erkannten potentiellen Behälterinstabilität bedeutet insbesondere, dass die Füllvorrichtung beim Befüllen von potentiell instabilen Behältern oder Behältern mit einer verhältnismäßig geringen Stabilität im Vergleich zu Behältern, die keine Behälterinstabilität aufweisen, bei ihrer Füllmethode von einer vorgegebenen Standardprozedur oder von Standard-Prozessparametern abweicht. Alternativ oder zusätzlich kann das Behälterstabilitätssignal bei einer erkannten Behälterinstabilität Anweisungen an eine der Füllvorrichtung vorgeordnete Behälterausleitungsvorrichtung umfassen, den betreffenden Behälter bei einer erkannten potentiellen Behälterinstabilität auszuleiten. Eine derartige Behälterausleitungsvorrichtung kann beispielsweise in die Inspektionsvorrichtung integriert oder dieser nachgeordnet sein, wobei in dem Fall sinnvollerweise die genannte Prüfkamera bzw. eine weitere Prüfkamera in Förderrichtung stromaufwärts der Behälterausleitungsvorrichtung angeordnet wird.

Gemäß einer weiteren vorteilhaften Ausgestaltung umfassen die Anweisungen an die Füllvorrichtung, den zu befüllenden Behälter nicht oder mit einer reduzierten Füllmenge und/oder einem reduzierten Fülldruck zu befüllen, ein vorgängig zum Befüllen durchgeführtes Spülen mit einem Spülgas oder Spanngas bei einem reduzierten Druck durchzuführen und/oder den befüllten Behälter nicht zu verschließen. Ein Vorteil dieser Ausgestaltungen besteht insbesondere darin, dass es nicht zwingend erforderlich ist, als instabil erkannte Behälter vor dem Befüllen auszuleiten. Hierdurch wird der konstruktive Aufwand reduziert. So ist es insbesondere durch eine nur teilweise Befüllung oder ein Nichtverschließen eines nicht oder nur teilweise befüllten Behälters möglich, diesen sozusagen zu kennzeichnen. Dadurch kann mit einer der Füllvorrichtung nachgeordneten Füllhöhenprüfeinrichtung ein solcher Behälter erkannt und entsprechend ausgeleitet werden. Da derartige Füllhöhenprüfeinrichtungen bei den meisten Abfüllanlagen ohnehin vorhanden sind, entsteht für die Aussortierung von als instabil erkannten Behältern somit kein apparativer Zusatzaufwand. Auch können durch eine Reduzierung der mechanischen Belastung solche Behälter in schonender Weise befüllt werden, die nur eine um ein bestimmtes Maß verminderte Stabilität aufweisen. So kann beispielsweise bei Mehrwegbehältern die Nutzungsdauer verlängert werden.

Die Erfindung betrifft weiterhin eine Verwendung eines Prüfsystems in einer Abfüllanlage zum Abfüllen von Produkten in Behältern, wobei das Prüfsystem zum Prüfen von zu befüllenden Behältern und Identifizieren von instabilen Behältern in einer Abfüllanlage umfasst zumindest eine Behälterprüfvorrichtung, wobei die Behälterprüfvorrichtung eine Beleuchtungseinrichtung, welche dazu eingerichtet ist, einen zu prüfenden Behälter mit polarisiertem Prüflicht zu beleuchten, eine änderungsbasierte Prüfkamera, welche einen Bildsensor aufweist, der dazu eingerichtet ist, Ausgangssignale ausschließlich in Reaktion auf erfasste Helligkeitsänderungen zu erzeugen, und zum Erfassen des von dem zu prüfenden Behälter reflektierten oder transmittierten Prüflichts vorgesehen ist, und einen der Prüfkamera zugeordneten Polarisator umfasst, wobei der Polarisator derart ausgerichtet ist, dass sich die Polarisationsrichtung des den Polarisator passierenden Lichts von der Polarisationsrichtung des von der Beleuchtungseinrichtung erzeugten Prüflichts unterscheidet, und eine Auswerteeinheit umfasst, welche dazu eingerichtet ist,
- von der Behälterprüfvorrichtung empfangene Ausgangssignale auf die Anwesenheit von lokalen Helligkeitsänderungen zu überprüfen (also zur Überprüfung, ob vom Bildsensor lokale Helligkeitsänderungen erfasst werden/wurden),
- ein Maß einer strukturellen Integrität des zu prüfenden Behälters zumindest auf der Grundlage einer festgestellten lokalen Helligkeitsänderung und vorgegebener Prüfkriterien zu ermitteln, und
- den zu prüfenden Behälter zumindest auf der Grundlage des ermittelten Maßes der strukturellen Integrität unter Anwendung eines Prüfalgorithmus hinsichtlich seiner Stabilität zu charakterisieren und darauf basierend ein Behälterstabilitätssignal zu erzeugen,
wobei die Abfüllanlage zumindest eine Füllvorrichtung umfasst, an der zumindest eine Behälterprüfvorrichtung des Prüfsystems angeordnet ist, wobei der zu prüfende Behälter während des Prüfens einem Stress ausgesetzt wird, welcher durch eine Anpresskraft, die den Behälter gegen ein Füllventil der Füllvorrichtung presst, erzeugt wird.

Die Füllvorrichtung kann eine Steuereinrichtung umfassen, welche mit einer Auswerteeinheit des Prüfsystems verbunden sein kann, um z.B. das Behälterstabilitätssignal von der Auswerteeinheit zu empfangen. Die Abfüllanlage kann ggf. weitere Komponenten wie eine Inspektionsvorrichtung zur Inspektion der zu befüllenden Behälter, welche dazu eingerichtet ist, zumindest einen Behälterparameter zu ermitteln, eine Fördervorrichtung, welche dazu eingerichtet ist, die zu befüllenden Behälter in einer Fördervorrichtung zumindest von der Inspektionsvorrichtung zu der Füllvorrichtung zu fördern, umfassen. Bevorzugt ist die Auswerteeinheit mit der Steuereinrichtung der Füllvorrichtung zum bidirektionalen Übermitteln von Signalen und ggf. mit einer jeweiligen Steuereinrichtung von einer oder mehreren weiteren Komponenten der Abfüllanlage zumindest zum Empfang von jeweiligen Signalen von dieser Steuereinrichtung gekoppelt, wobei die empfangenen Signale zumindest Identifizierungssignale und/oder Parameter, beispielsweise Prozess- oder Behälterparameter, umfassen. Zumindest ein Teil der Steuereinrichtungen ist bevorzugt dazu eingerichtet, jeweilige Identifizierungssignale, bevorzugt mittels Verwendung eines Schieberegisters, zu erzeugen, welche eine Nachverfolgung und/oder Identifizierung eines Behälters während seiner Verweildauer in der zugeordneten Komponente der Abfüllanlage ermöglichen, wobei die Auswerteeinheit ferner dazu eingerichtet ist, die von jeder Steuereinrichtung empfangenen Identifizierungssignale derart miteinander zu verknüpfen, dass ein jeweiliger Behälter zumindest von einem Zeitpunkt seiner Inspektion bis zu einem Zeitpunkt seines Befüllens nachverfolgbar und/oder identifizierbar ist. Die Abfüllanlage kann bevorzugt auch eine der Inspektionsvorrichtung vorgeordnete Behälterreinigungsvorrichtung aufweisen.

Als Auswerteeinheit kann auch eine kombinierte Steuer- und Auswerteeinrichtung zum Einsatz kommen, welche in Zusammenwirken mit den weiteren Komponenten des Prüfsystems und ggf. auch mit Komponenten der Abfüllanlage zur Durchführung des erfindungsgemäßen Verfahrens und seiner vorteilhaften Ausgestaltungen eingerichtet ist.

Weitere Vorteile des erfindungsgemäßen Verfahrens und vorteilhafte Ausgestaltungen ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird diese Merkmale zweckmäßigerweise auch einzeln betrachten und zu sinnvollen weiteren Kombinationen zusammenfassen. Insbesondere wird der Fachmann auch vorteilhafte Ausgestaltungen des Verfahrens als entsprechende vorteilhafte Ausgestaltungen des Prüfsystems betrachten und umgekehrt.

Es zeigen:
- Fig. 1: ein schematisches Blockdiagramm einer Abfüllanlage, mit der ein Verfahren gemäß einer Ausgestaltung der Erfindung durchgeführt werden kann, in Draufsicht; und
- Fig. 2: eine schematische Seitenansicht auf die Füllvorrichtung der Abfüllanlage von Fig. 1.

Im Folgenden werden für gleiche oder gleichartige Komponenten die gleichen Bezugszeichen verwendet.

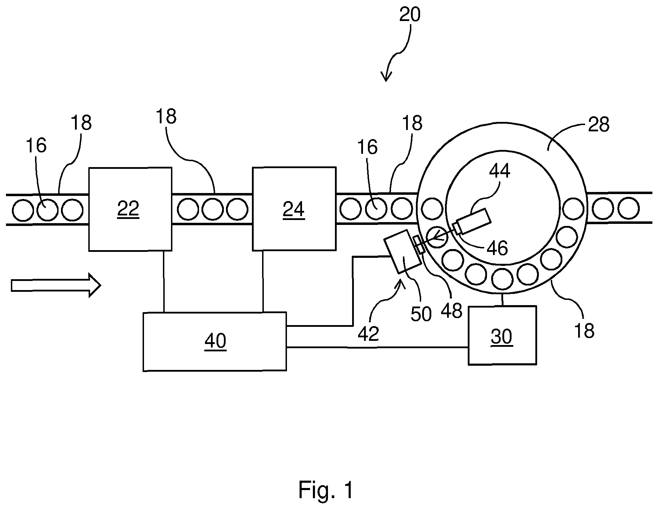

Fig. 1 zeigt schematisch eine Abfüllanlage 20, welche dazu eingerichtet ist, durch die Abfüllanlage 20 zu befüllende, bevorzugt transparente Behälter oder Flaschen 16 entlang einer Förderstrecke 18 in einer durch einen Pfeil gekennzeichneten Förderrichtung zu fördern. Entlang der Förderstrecke 18 sind verschiedene Komponenten vorgesehen, welche hier vereinfacht als Blöcke dargestellt sind. Neben den dargestellten Komponenten können auch weitere Komponenten vorgesehen sein.

Die in Förderrichtung geförderten Behälter oder Flaschen 16 gelangen zunächst in eine Behälterreinigungsvorrichtung 22, in der sie gereinigt werden. Die gereinigten Flaschen 16 werden anschließend in eine Inspektionsvorrichtung 24 gefördert, in welcher eine Inspektion zur Erkennung von fehlerhaften, d.h. offensichtlich beschädigten, verschlissenen und/oder ungenügend gereinigten Flaschen 16 erfolgt. Die Flaschen 16 werden nachfolgend zu einer Füllvorrichtung 28 gefördert, welche die zu befüllenden Flaschen 16 mittels eines Spülgases oder eines Spanngases ggf. vorspannt und mit dem einzufüllenden Produkt, beispielsweise einer Flüssigkeit, insbesondere einem Getränk, befüllt. Die Füllvorrichtung 28 ist im Ausführungsbeispiel als ein sogenanntes Füllkarussell ausgebildet, welches eine Vielzahl von Füllpositionen aufweist, in welche die vereinzelten Flaschen oder Behälter 16 kontinuierlich aufgenommen werden und nach Beendigung des Füllvorgangs wieder abgesetzt werden.

Innerhalb der Füllvorrichtung 28 können verschiedene Prozessschritte ablaufen. So kann zu Beginn des Füllvorgangs, d.h. nachdem eine zu befüllende Flasche 16 fluiddicht mit einem Fülladapter oder Füllventil verbunden wurde, zunächst ein Spülgas, beispielsweise CO₂, in die Flasche 16 eingeleitet werden, um eine Schutzatmosphäre für das Füllgut zu schaffen. Nachfolgend kann der Druck innerhalb des zu befüllenden Behälters 16 kontinuierlich erhöht werden, bis ein entsprechender Solldruck erreicht wurde. Anschließend wird das Füllgut in den zu befüllenden Behälter 16 eingefüllt. Das Vorspannen des Behälters 16 dient insbesondere dazu, bei kohlensäurehaltigem Füllgut ein Ausgasen des darin enthaltenen CO₂ und ein dadurch bedingtes Aufschäumen des Füllguts zu vermeiden.

An der Füllvorrichtung 28 kann ein integriertes oder separates Schaderkennungssystem vorgesehen sein, welches dazu eingerichtet ist, Schadereignisse wie platzende oder reißende Flaschen 16 zu detektieren.

Die Behälterreinigungsvorrichtung 22, die Inspektionsvorrichtung 24 und die Füllvorrichtung 28 weisen jeweils eine Steuereinrichtung auf, wobei in Fig. 1 lediglich die Steuereinrichtung 30 der Füllvorrichtung 28 als separate Komponente dargestellt ist. Die Behälterreinigungsvorrichtung 22 und die Inspektionsvorrichtung 24 bzw. ihre Steuereinrichtungen sowie die Steuereinrichtung 30 der Füllvorrichtung 28 sind mit einer Auswerteeinheit 40 verbunden, welche Bestandteil eines erfindungsgemäßen Prüfsystems ist. Bei den Steuereinrichtungen kann es sich z.B. um speicherprogrammierbare Steuereinrichtungen (SPS) handeln.

Das Prüfsystem umfasst ferner eine im Bereich der Füllvorrichtung 28 angeordnete Behälterprüfvorrichtung 42, wobei diese im Ausführungsbeispiel nahe des Behältereinlaufs angeordnet ist. Die Behälterprüfvorrichtung 42 umfasst eine Beleuchtungseinrichtung 44 mit einer nicht separat dargestellten Lichtquelle, und einen zugeordneten Polarisator 46 zur Erzeugung von polarisiertem Prüflicht. Die zu prüfenden Flaschen 16 werden von dem von der Beleuchtungseinrichtung 44 erzeugten polarisierten Prüflicht durchstrahlt. Das die Flaschen 16 passierende Prüflicht wird von einer änderungsbasierten Prüfkamera 50 erfasst. Die Prüfkamera 50 weist einen Bildsensor auf, der dazu eingerichtet ist, Ausgangssignale ausschließlich in Reaktion auf erfasste Helligkeitsänderungen zu erzeugen. Ein beispielhafter derartiger Bildsensor wird auch als retinomorpher oder neuromorphologischer Bildsensor bezeichnet und weist ähnlich wie bei herkömmlichen Bildsensoren eine Vielzahl von in Reihen und Spalten angeordneten lichtempfindlichen Elementen oder Pixeln auf.

Der Prüfkamera 50 ist ein weiterer Polarisator 48 zugeordnet, welcher derart ausgerichtet ist, dass nur diejenigen Lichtanteile des Prüflichts in die Prüfkamera 50 eintreten können, deren Polarisationsrichtung mit der Polarisationsrichtung des Polarisators 48 übereinstimmt. Die Polarisationsrichtung des der Prüfkamera 50 zugeordneten Polarisators 48 ist gegenüber der Polarisationsrichtung des Prüflichts bzw. der Polarisationsrichtung des der Beleuchtungseinrichtung 44 zugeordneten Polarisators 46 verdreht. Der Winkel zwischen den beiden Polarisationsrichtungen der Polarisatoren 46, 48 kann beispielsweise 90° oder auch einen niedrigeren von Null verschiedenen Wert aufweisen.

Diejenigen Anteile des Prüflichts, die intakte Bereiche des Behälters 16 passieren oder seitlich an dem Behälter 16 vorbeigelangen, erfahren in der Regel keine oder nur eine geringfügige Änderung ihrer Polarisationsrichtung und werden daher durch den Polarisator 48 unterdrückt und gelangen nicht in die Prüfkamera 50. Diejenigen Anteile des Prüflichts, welche Bereiche des Behälters 16 passieren, die strukturelle Anomalien oder Materialspannungen aufweisen, erfahren eine gewisse Änderung ihrer Polarisationsrichtung und können daher den Polarisator 48 passieren und werden von der Prüfkamera 50 als Helligkeitsänderungen registriert.

Ein Vorteil der Verwendung einer änderungsbasierten Prüfkamera 50 oder Ereigniskamera besteht darin, dass diese einen sehr hohen Dynamikbereich aufweist und auch geringfügige Helligkeitsänderungen mit einer hohen Bildwiederholrate erfassen kann. Dadurch ist es nicht erforderlich, die zu prüfenden Behälter 16 während des Prüfvorgangs anzuhalten oder eine mechanisch aufwendige Nachführung der Behälterprüfvorrichtung 42 vorzusehen.

Die Auswerteeinheit 40 ist mit der Prüfkamera 50 verbunden und kann die von der Prüfkamera 50 erzeugten Ausgangssignale empfangen. In der Auswerteeinheit 40 erfolgt eine Überprüfung der empfangenen Ausgangssignale auf die Anwesenheit von lokalen Helligkeitsänderungen. Hierfür können beispielsweise Methoden und Verfahren zur Mustererkennung zur Anwendung gelangen, was eingangs bereits ausführlich erläutert wurde. Anschließend kann in der Auswerteeinheit 40 ein Ermitteln eines Maßes einer strukturellen Integrität des zu prüfenden Behälters 16 zumindest auf der Grundlage einer festgestellten lokalen Helligkeitsänderung und vorgegebener Prüfkriterien erfolgen. Anschließend wird der zu prüfende Behälter 16 hinsichtlich seiner Stabilität zumindest auf der Grundlage des ermittelten Maßes der strukturellen Integrität unter Anwendung eines Prüfalgorithmus charakterisiert. Basierend auf dieser Charakterisierung wird ein Behälterstabilitätssignal erzeugt und zumindest an die Steuereinrichtung 30 der Füllvorrichtung 28 übermittelt. Das Charakterisieren eines jeweiligen Behälters oder einer jeweiligen Flasche 16 kann beispielsweise durch Zuordnen eines Stabilitätsparameters oder durch Klassifizieren der Flasche 16 in verschiedene Stabilitätsklassen oder -kategorien erfolgen.

Das Behälterstabilitätssignal kann bei einer erkannten Behälterinstabilität Anweisungen an die Steuereinrichtung 30 enthalten, welche die Füllvorrichtung 28 veranlasst, die betreffende Flasche 16 in einer modifizierten Weise zu befüllen, d.h. den zu befüllenden Behälter 16 nicht oder mit einer reduzierten Füllmenge und/oder einem reduzierten Fülldruck zu befüllen, ein vorgängig zum Befüllen durchgeführtes Spülen mit einem Spülgas oder Spanngas bei einem reduzierten Druck durchzuführen und/oder die befüllte Flasche 16 nicht zu verschließen. Hierdurch werden Schadereignisse wie Flaschenplatzer in präventiver Weise verhindert.

Sollte es aufgrund einer fehlerhaften Charakterisierung einer Flasche 16, bei welcher die Flasche 16 fälschlicherweise als stabil charakterisiert wurde oder die Modifizierung des Füllprozesses nicht ausreichend war, zu einem nicht erwarteten Schadereignis oder Platzen dieser Flasche 16 gekommen sein, wird von der Steuereinrichtung 30 ein Ereignisparameter erzeugt und an die Auswerteeinheit 40 übermittelt. Die Auswerteeinheit 40 kann diesen Ereignisparameter dazu verwenden, die Prüfkriterien und/oder den Prüfalgorithmus zu verbessern, so dass die Eintrittswahrscheinlichkeit für derartige unerwartete Schadereignisse reduziert werden kann.

Im vorliegenden Ausführungsbeispiel umfasst das Prüfsystem eine einzige Behälterprüfvorrichtung 42. Bei nicht dargestellten Abwandlungen können auch zwei oder mehr Prüfvorrichtungen 42 vorgesehen sein, welche an verschiedenen Positionen entlang der Förderstrecke 18 angeordnet sein können. Zum Beispiel ist es denkbar, auch innerhalb der Behälterreinigungsvorrichtung 22 und/oder innerhalb der Inspektionsvorrichtung 24 eine jeweilige weitere Behälterprüfvorrichtung 42 anzuordnen.

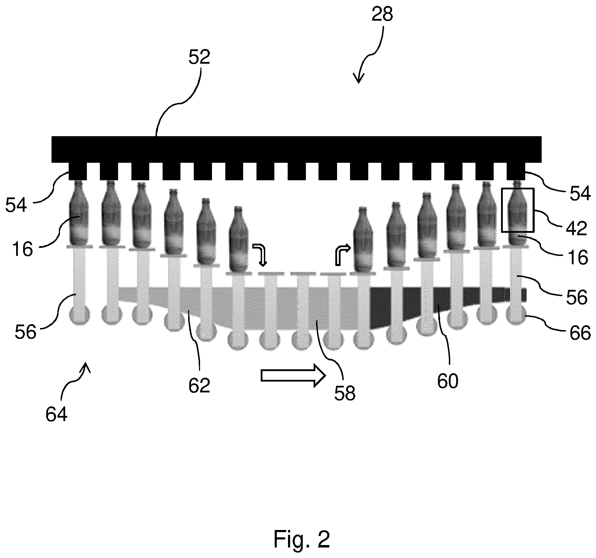

Mit Bezug nun auf Fig. 2 wird nachfolgend erläutert, auf welche Weise der während des Prüfens der zu befüllenden Behälter 16 benötigte Stress erzeugt wird.

Fig. 2 zeigt eine Seitenansicht der Füllvorrichtung 28 von Fig. 1. Die Darstellung der Füllvorrichtung 28 in Fig. 2 weicht in einigen nachfolgend erläuterten Details von der Darstellung von Fig. 1 ab. Aus Gründen der Übersichtlichkeit ist die Füllvorrichtung 28 in einer Art Abwicklung dargestellt, welche jedoch nicht den gesamten Umfang der ringförmigen Füllvorrichtung 28 wiedergibt, sondern nur einen gewissen Ausschnitt. Der Einlauf und Auslauf der Behälter oder Flaschen 16 erfolgt nicht an gegenüberliegenden Seiten der kreisförmigen Füllvorrichtung 28, sondern in einem mittigen Bereich von Fig. 2, wobei der Einlauf und Auslauf durch entsprechende gekrümmte Pfeile symbolisiert ist. Die Rotations- bzw. Förderrichtung der Behälter 16 in der Füllvorrichtung 28 ist durch ein Pfeilsymbol gekennzeichnet.

Die Füllvorrichtung 28 umfasst einen Ringkessel 52, an dessen Unterseite in regelmäßigen Abständen Füllventile 54 angeordnet sind. Der Füllvorrichtung 28 ist eine Fördervorrichtung 64 zugeordnet, welche eine Vielzahl von höhenverstellbaren Hubtellern 58 umfasst. Die Hubteller 58 sind korrespondierend zu den Füllventilen 54 angeordnet und laufen synchron mit dem rotierenden Ringkessel 52 auf einer Kreisbahn um. Die zum Anheben und Anpressen der auf den Hubtellern 56 gelagerten Flaschen 16 notwendige Kraft kann durch eine nicht dargestellte Pressvorrichtung aufgebracht werden. Beispielsweise können beim gezeigten Ausführungsbeispiel die Hubteller 56 in Richtung auf den Ringkessel hin mittels Federkraft vorgespannt sein.

Die Steuerung der Hubtellerbewegung erfolgt mit Hilfe einer Steuerkulisse 58, welche mit jeweiligen Rollen 66 zusammenwirkt, die an der Unterseite der Hubteller 56 angeordnet sind. Die Steuerkulisse 58 weist einen Anpressabschnitt 60 auf, welcher das Anheben und Anpressen der Flaschen 16 an die Füllventile 54 bewirkt (z.B. durch Entspannen einer jeweiligen Feder), sowie einen Absenkabschnitt 62 auf, welcher nach erfolgtem Befüllen die nunmehr befüllten Flaschen 66 absenkt (z.B. unter erneutem Spannen der Feder) und dabei von den Füllventilen 54 löst. Die Rollen 66 der Hubteller 56 sind hierfür stets mit der Unterseite der Steuerkulisse 58 in Kontakt, an der die entsprechenden Steuerabschnitte ausgebildet sind.

Die Behälterprüfvorrichtung 42 ist in einem Bereich angeordnet, in dem ein jeweiliger Behälter 16 mit dem zugeordneten Füllventil 54 in Kontakt kommt. Durch eine entsprechende Ausgestaltung des Anpressabschnitts 60 mit einer geeigneten, sich nur noch geringfügig ändernden Neigung der Steuerfläche kann die Anpresskraft des Behälters 16 gegen das Füllventil 54 mit einem vorgegebenen Gradienten erhöht werden.

Die Behälterprüfvorrichtung 42 kann ortsfest angeordnet sein. Alternativ kann zumindest eine Nachführvorrichtung vorgesehen sein, welche Schwenk- und/oder Versetzbewegung der Behälterprüfvorrichtung 42 bzw. der Prüfkamera 50 ermöglicht. Hierdurch kann das Gesichtsfeld der Prüfkamera 50 entsprechend der Bewegung des Behälters 16 in Förderrichtung und bevorzugt auch in der Anpressrichtung nachgeführt werden, so dass ein Abbild des zu prüfenden Behälters 16 auf dem Bildsensor der Prüfkamera 50 im Wesentlichen ortsfest ist und somit Bewegungs- und Schärfen- bzw. Helligkeitsänderungen, die alleine auf eine Bewegung des Behälters 16 während der Prüfung zurückzuführen sind, vermieden werden können.

Durch den beim Anpressen an ein Füllventil 54 erzeugten Stress auf die Flasche 16 werden gegebenenfalls vorhandene strukturelle Anomalien stärker beansprucht, wodurch sich in Abhängigkeit von dem Behältermaterial auch die Beeinflussung der Polarisationsrichtung des Prüflichts erhöht, insbesondere sich auch das Maß der Polarisationsrichtungsänderung, d.h. die Winkeländerung der Polarisationsrichtung, vergrößert, so dass mit zunehmendem Stress ein höherer Anteil an Prüflicht, welches durch die betreffenden Bereiche struktureller Schädigungen hindurchtritt, von der Prüfkamera 50 erfasst wird.

Das Prüfsystem kann weiterhin Mittel zur Nachverfolgung und/oder Identifizierung einzelner Flaschen 16 während ihrer Verweildauer in der Abfüllanlage 20 oder zumindest innerhalb eines bestimmten Bereichs der Abfüllanlage 20 umfassen. Hierfür kann beispielsweise ein Schieberegister zum Einsatz kommen. Diese Mittel zur Nachverfolgung und/oder Identifizierung sind bevorzugt mit der Auswerteeinheit 40 verbunden, so dass es der Auswerteeinheit 40 ermöglicht wird, eine jeweilige Flasche 16 zumindest von einem Zeitpunkt ihrer Inspektion bis zur Beendigung des Füllvorgangs in der Füllvorrichtung 28 nachzuverfolgen und/oder zu identifizieren.

Die Charakterisierung der Behälterstabilität kann im Bereich des zunehmenden Stresses insbesondere auch kontinuierlich erfolgen, so dass bei einer sich abzeichnenden Behälterinstabilität nicht nur der eigentliche Füllvorgang des Behälters 16 modifiziert werden kann, sondern auch eine anderweitige, Stress hervorrufende Beanspruchung, z.B. ein Beaufschlagen mit Spanngas, vorzeitig abgebrochen werden kann.

Die Auswerteeinheit 40 kann zusätzlich von der Inspektionsvorrichtung 24 als Ergebnis der Inspektion zumindest einen Behälterparameter, beispielsweise einen Verschleißparameter wie den Zerkratzungsgrad oder einen Beschädigungsparameter, empfangen. Weiterhin kann die Auswerteeinheit 40 von der Steuereinrichtung 30 der Füllvorrichtung 28 einen oder mehrere Prozessparameter, wie beispielsweise einen (maximalen) Vorspanndruck, einen (maximalen) Fülldruck und/oder die Fülltemperatur, sowie ggf. einen Ereignisparameter, welcher ein beim Befüllen einer Flasche 16 auftretendes Schadereignis charakterisiert, empfangen. Der Ereignisparameter kann beispielsweise mit Hilfe eines mit der Füllvorrichtung 28 verbundenen oder eines in der Füllvorrichtung 28 integrierten Schaderkennungssystems (nicht dargestellt) erzeugt werden.

Die Auswerteeinheit 40 kann eine Art Datenbank oder Register aufweisen, in welcher die für eine jeweilige Flasche 16 ermittelten Behälterparameter und/oder Prozessparameter sowie ggf. ein für diese Flasche 16 erzeugter Ereignisparameter, welcher ein diese Flasche 16 betreffendes Schadereignis charakterisiert, gespeichert werden. Die Speicherung kann für die Verweildauer der betreffenden Flasche 16 in der Abfüllanlage 20 oder auch für längere Zeit erfolgen, um eine statistische Auswertung zu ermöglichen.

Gemäß einer weiteren Abwandlung können die Beleuchtungseinrichtung 44 und die Prüfkamera 50 auch in einer Reflexionskonfiguration angeordnet sein, in welcher das Prüflicht an dem zu prüfenden Behälter 16 reflektiert wird. Dadurch können auch nicht transparente Behälter 16 in der erfindungsgemäßen Weise hinsichtlich ihrer Stabilität überprüft werden.

Durch die Prüfung der Behälter oder Flaschen 16 auf Stabilität unter Berücksichtigung von Behälterparametern, Prozessparametern und ggf. auftretenden Ereignisparametern wird die Wahrscheinlichkeit für ein Auftreten von unerwünschten Behälterplatzern während des Füllvorgangs präventiv vermindert. Die Füllleistung der Abfüllanlage 20 wird durch frühzeitiges Aussortieren bzw. durch eine modifizierte Befüllung potentiell platzgefährdeter Behälter 16 maximiert und die Gefahr für das Personal und den Endverbraucher durch Behälterbruchstücke reduziert.

### Bezugszeichenliste

- 16: Behälter, Flasche
- 18: Förderstrecke
- 20: Abfüllanlage
- 22: Reinigungsvorrichtung
- 24: Inspektionsvorrichtung
- 28: Füllvorrichtung
- 30: Steuereinrichtung
- 40: Auswerteeinheit
- 42: Behälterprüfvorrichtung
- 44: Beleuchtungseinrichtung
- 46, 48: Polarisator
- 50: Prüfkamera
- 52: Ringkessel
- 54: Füllventil
- 56: Hubteller
- 58: Steuerkulisse
- 60: Anpressabschnitt
- 62: Absenkabschnitt
- 64: Fördervorrichtung
- 66: Rolle

## Patentansprüche

1. Verfahren zum Prüfen von zu befüllenden Behältern (16) und Identifizieren von instabilen Behältern (16) in einer Abfüllanlage (20), mit den Prüfschritten:
- Beleuchten eines zu prüfenden Behälters (16) mit polarisiertem Prüflicht,
- Erfassen des von dem zu prüfenden Behälter (16) reflektierten oder transmittierten Prüflichts mittels einer änderungsbasierten Prüfkamera (50), welche einen Bildsensor aufweist, der dazu eingerichtet ist, Ausgangssignale ausschließlich in Reaktion auf erfasste Helligkeitsänderungen zu erzeugen, wobei der Prüfkamera (50) ein Polarisator (48) zugeordnet ist, welcher derart ausgerichtet ist, dass sich die Polarisationsrichtung des den Polarisator (48) passierenden Lichts von der Polarisationsrichtung des polarisierten Prüflichts unterscheidet,
- Überprüfen der von der Prüfkamera (50) erzeugten Ausgangssignale auf die Anwesenheit von lokalen Helligkeitsänderungen,
- Ermitteln eines Maßes einer strukturellen Integrität des zu prüfenden Behälters (16) zumindest auf der Grundlage einer festgestellten lokalen Helligkeitsänderung und vorgegebener Prüfkriterien, und
- Charakterisieren des zu prüfenden Behälters (16) hinsichtlich seiner Stabilität zumindest auf der Grundlage des ermittelten Maßes der strukturellen Integrität unter Anwendung eines Prüfalgorithmus und Erzeugen eines darauf basierenden Behälterstabilitätssignals,
wobei der zu prüfende Behälter (16) während des Prüfens einem Stress ausgesetzt wird,
**dadurch gekennzeichnet,**
**dass** der Stress durch eine Anpresskraft, die den Behälter gegen ein Füllventil (54) einer Füllvorrichtung (28) der Abfüllanlage (20) presst, erzeugt wird.

2. Verfahren nach Anspruch 1,
**dadurch gekennzeichnet,**
**dass** die Anpresskraft während des Prüfens fortschreitend erhöht wird.

3. Verfahren nach Anspruch 2,
**dadurch gekennzeichnet,**
**dass** bei einer erkannten potentiellen Behälterinstabilität das fortschreitende Erhöhen der Anpresskraft sofort oder bei Erreichen eines vorgegebenen Schwellenwerts beendet wird.

4. Verfahren nach einem der vorhergehenden Ansprüche,
**dadurch gekennzeichnet,**
**dass** zur Kompensation einer Bewegung des zu prüfenden Behälters (16) während des Erfassens des Prüflichts ein zwischen dem sich bewegenden Behälter (16) und dem Bildsensor aufgespannter Empfangslichtpfad derart modifiziert wird, dass sich die Relativlage eines Abbilds des zu prüfenden Behälters (16) auf dem Bildsensor zumindest während eines vorgegebenen Erfassungszeitraums nicht ändert.

5. Verfahren nach Anspruch 4,
**dadurch gekennzeichnet,**
**dass** wenigstens eine Nachführvorrichtung vorgesehen ist, welche
- die Prüfkamera (50) und/oder
- eine im Empfangslichtpfad zwischen dem zu prüfenden Behälter und der Prüfkamera (50) angeordnete Umlenkeinrichtung translatorisch und/oder rotatorisch zumindest während des Erfassungszeitraums derart bewegt, dass sich die Relativlage eines Abbilds des zu prüfenden Behälters (16) auf dem Bildsensor zumindest während des vorgegebenen Erfassungszeitraums nicht ändert.

6. Verfahren nach Anspruch 5,
**dadurch gekennzeichnet,**
**dass** zumindest eine Prüfkamera (50) an der Nachführvorrichtung angeordnet ist, wobei die Nachführvorrichtung die zumindest eine Prüfkamera kontinuierlich oder diskontinuierlich entlang eines Bewegungspfads verfährt.

7. Verfahren nach Anspruch 5 oder 6,
**dadurch gekennzeichnet,**
**dass** die Umlenkeinrichtung einen Spiegel, ein Polygonrad oder ein Prismenrad umfasst, wobei die Nachführvorrichtung dazu eingerichtet ist, die Umlenkeinrichtung mit gleicher oder periodisch wechselnder Drehrichtung zu rotieren.

8. Verfahren nach einem der vorhergehenden Ansprüche,
**dadurch gekennzeichnet,**
**dass** das Überprüfen der von der Prüfkamera (50) erzeugten Ausgangssignale auf die Anwesenheit von lokalen Helligkeitsänderungen ein Analysieren der Ausgangssignale mittels Methoden der Mustererkennung umfasst.

9. Verfahren nach einem der vorhergehenden Ansprüche,
**dadurch gekennzeichnet,**
**dass** das Behälterstabilitätssignal bei einer erkannten potentiellen Behälterinstabilität Anweisungen an die Abfüllanlage (20) umfasst, den betreffenden Behälter (16) in einer modifizierten Weise zu befüllen oder den betreffenden Behälter (16) vor dem Befüllen auszuleiten.

10. Verfahren nach Anspruch 9,
**dadurch gekennzeichnet,**
**dass** die Anweisungen an die Füllvorrichtung (28) umfassen,
- den zu befüllenden Behälter (16) nicht oder mit einer reduzierten Füllmenge und/oder einem reduzierten Fülldruck zu befüllen,
- ein vorgängig zum Befüllen durchgeführtes Spülen mit einem Spülgas oder Spanngas bei einem reduzierten Druck durchzuführen und/oder
- den befüllten Behälter (16) nicht zu verschließen.

11. Verwendung eines Prüfsystems in einer Abfüllanlage (20) zum Abfüllen von Produkten in Behältern (16),
wobei das Prüfsystem zum Prüfen von zu befüllenden Behältern (16) und Identifizieren von instabilen Behältern (16) in einer Abfüllanlage (20), umfasst
zumindest eine Behälterprüfvorrichtung (42), wobei die Behälterprüfvorrichtung (42) eine Beleuchtungseinrichtung (44), welche dazu eingerichtet ist, einen zu prüfenden Behälter (16) mit polarisiertem Prüflicht zu beleuchten, eine änderungsbasierte Prüfkamera (50), welche einen Bildsensor aufweist, der dazu eingerichtet ist, Ausgangssignale ausschließlich in Reaktion auf erfasste Helligkeitsänderungen zu erzeugen, und zum Erfassen des von dem zu prüfenden Behälter (16) reflektierten oder transmittierten Prüflichts vorgesehen ist, und einen der Prüfkamera (50) zugeordneten Polarisator (48) umfasst, wobei der Polarisator (48) derart ausgerichtet ist, dass sich die Polarisationsrichtung des den Polarisator (48) passierenden Lichts von der Polarisationsrichtung des von der Beleuchtungseinrichtung (44) erzeugten Prüflichts unterscheidet, und
eine Auswerteeinheit (40), welche dazu eingerichtet ist,
- von der Behälterprüfvorrichtung (42) empfangene Ausgangssignale auf die Anwesenheit von lokalen Helligkeitsänderungen zu überprüfen,
- ein Maß einer strukturellen Integrität des zu prüfenden Behälters (16) zumindest auf der Grundlage einer festgestellten lokalen Helligkeitsänderung und vorgegebener Prüfkriterien zu ermitteln, und
- den zu prüfenden Behälter (16) zumindest auf der Grundlage des ermittelten Maßes der strukturellen Integrität unter Anwendung eines Prüfalgorithmus hinsichtlich seiner Stabilität zu charakterisieren und darauf basierend ein Behälterstabilitätssignal zu erzeugen,
wobei die Abfüllanlage (20) zumindest eine Füllvorrichtung (28) umfasst, an der zumindest eine Behälterprüfvorrichtung (42) des Prüfsystems angeordnet ist, wobei der zu prüfende Behälter (16) während des Prüfens einem Stress ausgesetzt wird, welcher durch eine Anpresskraft, die den Behälter gegen ein Füllventil (54) der Füllvorrichtung (28) presst, erzeugt wird.

## Claims

1. A method for checking containers (16) to be filled and identifying unstable containers (16) in a filling system (20), comprising the checking steps:
- illuminating a container (16) to be checked with polarized checking light,
- detecting the checking light reflected or transmitted by the container (16) to be checked by means of a change-based checking camera (50) that has an image sensor which is configured to generate output signals solely in response to detected brightness changes, wherein the checking camera (50) is assigned a polarizer (48) which is oriented such that the polarization direction of the light passing through the polarizer (48) differs from the polarization direction of the polarized checking light,
- checking the output signals generated by the checking camera (50) for the presence of local brightness changes,
- determining a measure of a structural integrity of the container (16) to be checked at least based on a detected local brightness change and based on predefined checking criteria, and
- characterizing the container (16) to be checked with respect to its stability at least based on the determined measure of the structural integrity using a checking algorithm and generating a container stability signal based thereon,
wherein the container (16) to be checked is exposed to a stress during the checking,
**characterized in that**
the stress is generated by a contact pressure which presses the container against a filling valve (54) of a filling apparatus (28) of the filling system (20).

2. A method according to claim 1,
**characterized in that**
the contact pressure is progressively increased during the checking.

3. A method according to claim 2,
**characterized in that**,
when a potential container instability is recognized, the progressive increase in the contact pressure is stopped immediately or when reaching a predefined threshold value.

4. A method according to any one of the preceding claims,
**characterized in that**,
in order to compensate for a movement of the container (16) to be checked during the detection of the checking light, a reception light path spanned between the moving container (16) and the image sensor is modified such that the relative position of an image of the container (16) to be checked on the image sensor does not change at least during a predefined detection period.

5. A method according to claim 4,
**characterized in that**
at least one tracking apparatus is provided that moves
- the checking camera (50) and/or
- a deflection device arranged in the reception light path between the container to be checked and the checking camera (50)
in a translational and/or rotational manner at least during the detection period such that the relative position of an image of the container (16) to be checked on the image sensor does not change at least during the predefined detection period.

6. A method according to claim 5,
**characterized in that**
at least one checking camera (50) is arranged at the tracking apparatus, wherein the tracking apparatus moves the at least one checking camera continuously or discontinuously along a movement path.

7. A method according to claim 5 or 6,
**characterized in that**
the deflection device comprises a mirror, a polygonal wheel or a prism wheel, with the tracking apparatus being configured to rotate the deflection device with the same direction of rotation or a periodically changing direction of rotation.

8. A method according to any one of the preceding claims,
**characterized in that**
the checking of the output signals generated by the checking camera (50) for the presence of local brightness changes comprises analyzing the output signals by means of pattern recognition methods.

9. A method according to any one of the preceding claims,
**characterized in that**,
when a potential container instability is recognized, the container stability signal comprises instructions to the filling system (20) to fill the respective container (16) in a modified manner or to reject the respective container (16) before the filling.

10. A method according to claim 9,
**characterized in that**
the instructions to the filling apparatus (28) comprise
- not filling the container (16) to be filled or filling it with a reduced filling quantity and/or at a reduced filling pressure,
- performing a flushing, which is performed prior to the filling, with a purge gas or pressurized gas at a reduced pressure, and/or
- not closing the filled container (16).

11. Use of a checking system in a filling system (20) for filling products into containers (16),
wherein the checking system for checking containers (16) to be filled and identifying unstable containers (16) in a filling system (20) comprises at least one container checking apparatus (42), wherein the container checking apparatus (42) comprises an illumination device (44) which is configured to illuminate a container (16) to be checked with polarized checking light, a change-based checking camera (50) that has an image sensor, which is configured to generate output signals solely in response to detected brightness changes, and that is provided to detect the checking light reflected or transmitted by the container (16) to be checked, and a polarizer (48) assigned to the checking camera (50), wherein the polarizer (48) is oriented such that the polarization direction of the light passing through the polarizer (48) is different from the polarization direction of the checking light generated by the illumination device (44), and
an evaluation unit (40) which is configured
- to check output signals received from the container checking apparatus (42) for the presence of local brightness changes,
- to determine a measure of a structural integrity of the container (16) to be checked at least based on a detected local brightness change and based on predefined checking criteria, and
- to characterize the container (16) to be checked with respect to its stability at least based on the determined measure of the structural integrity using a checking algorithm and to generate a container stability signal based thereon,
wherein the filling system (20) comprises at least one filling apparatus (28) at which at least one container checking apparatus (42) of the checking system is arranged, wherein the container (16) to be checked is exposed to a stress during the checking, which stress is generated by a contact pressure which presses the container against a filling valve (54) of the filling apparatus (28).

## Revendications

1. Procédé de contrôle de récipients (16) à remplir et d'identification de récipients instables (16) dans une installation de remplissage (20), comprenant les étapes de contrôle consistant à :
- éclairer un récipient (16) à contrôler avec une lumière de contrôle polarisée,
- détecter la lumière de contrôle, réfléchie ou transmise par le récipient (16) à contrôler, au moyen d'une caméra de contrôle (50) basée sur des variations qui présente un capteur d'image conçu pour générer des signaux de sortie exclusivement en réaction aux variations de luminosité détectées, un polariseur (48) étant associé à la caméra de contrôle (50), lequel est orienté de telle sorte que la direction de polarisation de la lumière passant par le polariseur (48) diffère de la direction de polarisation de la lumière de contrôle polarisée,
- vérifier la présence de variations de luminosité locales dans les signaux de sortie générés par la caméra de contrôle (50),
- déterminer une mesure d'intégrité structurelle du récipient (16) à contrôler, au moins sur la base d'une variation de luminosité locale détectée et de critères de contrôle prédéterminés, et
- caractériser le récipient (16) à contrôler quant à sa stabilité, au moins sur la base de la mesure déterminée de l'intégrité structurelle, en utilisant un algorithme de contrôle, et générer un signal de stabilité de récipient sur cette base,
le récipient (16) à contrôler étant soumis à une contrainte pendant le contrôle,
**caractérisé en ce que**
la contrainte est générée par une force de pression qui pousse le récipient contre une vanne de remplissage (54) d'un dispositif de remplissage (28) de l'installation de remplissage (20).

2. Procédé selon la revendication 1,
**caractérisé en ce que**
la force de pression est progressivement augmentée pendant le contrôle.

3. Procédé selon la revendication 2,
**caractérisé en ce que**
en cas de détection d'une instabilité potentielle du récipient, l'augmentation progressive de la force de pression est arrêtée immédiatement ou lorsqu'une valeur seuil prédéterminée est atteinte.

4. Procédé selon l'une des revendications précédentes,
**caractérisé en ce que**
en vue de compenser un mouvement du récipient (16) à contrôler pendant la détection de la lumière de contrôle, un trajet de lumière de réception défini entre le récipient (16) en mouvement et le capteur d'image est modifié de telle sorte que la position relative d'une image du récipient (16) à contrôler sur le capteur d'image ne change pas au moins pendant une période de détection prédéterminée.

5. Procédé selon la revendication 4,
**caractérisé en ce que**
il est prévu au moins un dispositif suiveur qui déplace
- la caméra de contrôle (50) et/ou
- un dispositif de renvoi disposé dans le trajet de lumière de réception entre le récipient à contrôler et la caméra de contrôle (50)
en translation et/ou en rotation au moins pendant la période de détection de telle sorte que la position relative d'une image du récipient (16) à contrôler sur le capteur d'image ne change pas au moins pendant la période de détection prédéterminée.

6. Procédé selon la revendication 5,
**caractérisé en ce que**
au moins une caméra de contrôle (50) est disposée sur le dispositif suiveur, le dispositif suiveur déplaçant ladite au moins une caméra de contrôle de manière continue ou discontinue le long d'une trajectoire de déplacement.

7. Procédé selon la revendication 5 ou 6,
**caractérisé en ce que**
le dispositif de renvoi comprend un miroir, une roue polygonale ou une roue prismatique, le dispositif suiveur étant conçu pour faire tourner le dispositif de renvoi dans le même sens de rotation ou dans un sens de rotation qui change périodiquement.

8. Procédé selon l'une des revendications précédentes,
**caractérisé en ce que**
la vérification de la présence de variations de luminosité locales dans les signaux de sortie générés par la caméra de contrôle (50) comprend une analyse des signaux de sortie par des méthodes de reconnaissance de motifs.

9. Procédé selon l'une des revendications précédentes,
**caractérisé en ce que**
en cas de détection d'une instabilité potentielle du récipient, le signal de stabilité de récipient comprend des instructions destinées à l'installation de remplissage (20) pour remplir le récipient (16) concerné d'une manière modifiée ou pour évacuer le récipient (16) concerné avant le remplissage.

10. Procédé selon la revendication 9,
**caractérisé en ce que**
les instructions destinées au dispositif de remplissage (28) indiquent
- de ne pas remplir le récipient (16) à remplir ou de le remplir avec une quantité de remplissage réduite et/ou à une pression de remplissage réduite,
- d'effectuer, préalablement au remplissage, un rinçage avec un gaz de rinçage ou avec un gaz de pressurisation à une pression réduite, et/ou
- de ne pas fermer le récipient (16) rempli.

11. Utilisation d'un système de contrôle dans une installation de remplissage (20) pour verser des produits dans des récipients (16),
dans laquelle le système de contrôle, destiné à contrôler des récipients (16) à remplir et à identifier des récipients instables (16) dans une installation de remplissage (20), comprend
au moins un dispositif de contrôle de récipients (42), le dispositif de contrôle de récipients (42) comprenant un dispositif d'éclairage (44) conçu pour éclairer un récipient (16) à contrôler avec une lumière de contrôle polarisée, une caméra de contrôle (50) basée sur des variations, qui présente un capteur d'image conçu pour générer des signaux de sortie exclusivement en réaction aux variations de luminosité détectées et pour détecter la lumière de contrôle réfléchie ou transmise par le récipient (16) à contrôler, et un polariseur (48) associé à la caméra de contrôle (50), le polarisateur (48) étant orienté de telle sorte que la direction de polarisation de la lumière passant par le polariseur (48) diffère de la direction de polarisation de la lumière de contrôle générée par le dispositif d'éclairage (44), et
une unité d'évaluation (40) conçue pour
- vérifier la présence de variations de luminosité locales dans les signaux de sortie reçus par le dispositif de contrôle de récipients (42),
- déterminer une mesure d'intégrité structurelle du récipient (16) à contrôler, au moins sur la base d'une variation de luminosité locale détectée et de critères de contrôle prédéterminés, et
- caractériser le récipient (16) à contrôler quant à sa stabilité, au moins sur la base de la mesure déterminée de l'intégrité structurelle, en utilisant un algorithme de contrôle, et générer un signal de stabilité de récipient sur cette base,
l'installation de remplissage (20) comprenant au moins un dispositif de remplissage (28) sur lequel est disposé au moins un dispositif de contrôle de récipients (42) du système de contrôle, le récipient (16) à contrôler étant soumis à une contrainte pendant le contrôle, laquelle est générée par une force de pression qui pousse le récipient contre une vanne de remplissage (54) du dispositif de remplissage (28).
